# EUROPEAN PATENT APPLICATION

(11) **EP 4 617 083 A1**
(43) Date of publication of application: **17.09.2025**
(21) Application number: 25163276.6
(22) Date of filing: 12.03.2025
(51) Int. Cl.: B60C 23/04, B64F 5/60

(54) **A TIRE MONITORING SYSTEM**

(30) Priority: 12.03.2024 GB 202403570
(71) Applicant: Airbus Operations Limited, Bristol BS34 7PA (GB); Meggitt SA, 1752 Villars-sur-Glâne (CH)
(72) Inventor: BILL, Andrew, Bristol, BS34 7PA (GB); LUTZELSCHWAB, Marc, 1752 Villars-sur-Glâne (CH); MARX, Yves, 1752 Villars-sur-Glâne (CH); PICHON, Bertrand, 1752 Villars-sur-Glâne (CH); SOUCHON, Olivier, 1752 Villars-sur-Glâne (CH)
(74) Representative: EIP

(57) **Abstract**

Disclosed is tire monitoring system (500) including a tire monitoring device (100) and a remote device (200). The tire monitoring device (100) includes a first processor (102), and a first wireless communication interface (104). The remote device (200) includes a second processor (202), a display device (204), and a second wireless communication interface (214). The first processor (102) is configured to monitor the tire monitoring device (100) to determine an altered operational mode of the tire monitoring device (100), and to cause transmission of a signal encoding an indication of the altered operational mode of the tire monitoring device (100) to the remote device (200) via the first (104) and second (214) wireless communication interfaces. The second processor (202) is configured to determine, based on the signal encoding the indication of the altered operational mode of the tire monitoring device (100), a maintenance message corresponding to the altered operational mode of the tire monitoring device (100), and to cause the maintenance message to be displayed on the display device (204).

## Description

### TECHNICAL FIELD

The present invention relates to a tire monitoring system.

### BACKGROUND

Checking tire pressure is an important part of the maintenance of a vehicle. Tire pressures should be maintained at predetermined pressures to ensure that a tire performs as intended by the manufacturer. Incorrect tire pressure can lead to a tire failing, perhaps bursting and causing damage to the vehicle and/or a loss of control.

### SUMMARY

A first aspect of the present invention provides a tire monitoring system comprising: a tire monitoring device comprising: a first processor; and a first wireless communication interface; and a remote device comprising: a second processor; a display device; and a second wireless communication interface; wherein: the first processor is configured to monitor the tire monitoring device to determine an altered operational mode of the tire monitoring device, and to cause transmission of a signal encoding an indication of the altered operational mode of the tire monitoring device to the remote device via the first and second wireless communication interfaces; and the second processor is configured to determine, based on the signal encoding the indication of the altered operational mode of the tire monitoring device, a maintenance message corresponding to the altered operational mode of the tire monitoring device, and to cause the maintenance message to be displayed on the display device.

The tire monitoring system may function in a manner similar to a conventional avionics system, without needing the tire monitoring device to be connected to any conventional monitoring system, such as an avionics system on-board an aircraft. In particular, the combination of the tire monitoring device and the remote device can be utilised to determine altered operational modes of the tire monitoring device, or components thereof, and to direct an operator of the remote device to an appropriate remedial or maintenance action, such as directing the operator to the relevant section of an aircraft maintenance manual (AMM) in the case of an aircraft so that appropriate remedial action can be taken.

Optionally, the first processor is configured to cause performance of at least one built-in self-test procedure at the tire monitoring device. Optionally the tire monitoring device comprises at least one piece of built-in test equipment.

Optionally, the altered operational mode of the tire monitoring device comprises an operational mode in which performance of the tire monitoring device, or at least one component of the tire monitoring device, is reduced and/or altered relative to a normal operational mode of the tire monitoring device.

Optionally, the remote device comprises a remote handheld device. For example, the remote device may comprise a remote handheld device configured to be held by a maintenance operator in use.

Optionally, the remote device is configured to communicate with the tire monitoring device, via the first and second wireless communication interfaces, over a range of no more than 100m, no more than 75m, no more than 50m, no more than 25m, or no more than 10m.

Optionally, the remote device is configured to communicate with the tire monitoring device, via the first and second wireless communication interfaces, over a range of no more than 10cm, no more than 5cm, no more 3cm, or no more than 5mm.

Optionally, the first processor is configured to cause transmission of the signal encoding the indication of the altered operational mode of the tire monitoring device in response to a request from the remote device.

Optionally, the tire monitoring device is configured to enter a maintenance mode in response to the request from the remote device, and the first processor is configured to cause transmission of the signal when the tire monitoring device is in the maintenance mode.

Optionally, the tire monitoring device comprises a memory configured to store the indication of the altered operational mode of the tire monitoring device, and the tire monitoring device is configured to receive a download command from the remote device, and to transmit a status message regarding presence of the indication in the memory to the remote device in response to the download command, and the remote device is configured to transmit the request to the tire monitoring device in response to the status message.

Optionally, the indication can be cleared from the memory when the tire monitoring device is in the maintenance mode. For example, the first processor may be configured to cause deletion of the indication from the memory in response to a further request received from the remote device when the tire monitoring device is in the maintenance mode.

Optionally, the memory stores at least one of a pressure reading, a temperature reading, and a timestamp.

Optionally, the maintenance message comprises a message that directs an operator of the remote handheld device to a section of an aircraft maintenance manual.

Optionally, the indication of the altered operational mode of the tire monitoring device comprises a numerical value corresponding to the altered operational mode of the tire monitoring device. For example, each altered operational mode may comprise a corresponding numerical value, with the relationship between altered operational mode and corresponding numerical value determined by a relationship analysis performed prior to installation of the tire monitoring device.

Optionally, the remote device interprets the numerical code to determine the maintenance message.

Optionally, the tire monitoring system comprises a remote memory accessible by the second processor, the remote memory is configured to store a relationship between the indication of the altered operational mode of the tire monitoring device and the maintenance message, and the second processor is configured to obtain the relationship to determine the maintenance message.

Optionally, the remote memory is part of the remote device. Optionally the remote memory is remote from, but accessible by, the remote device.

Optionally, the indication comprises the maintenance message. For example, the first processor may determine the maintenance message for a given altered operational mode, and encode the maintenance message in the signal.

Optionally, the tire monitoring device comprises a pressure sensor, and the altered operational mode of the tire monitoring device comprises an altered operational mode of the pressure sensor.

Optionally, the altered operational mode of the pressure sensor comprises the pressure sensor reading a pressure value outside of an expected normal operating pressure range. Optionally, the altered operational mode of the pressure sensor comprises a capability of the pressure sensor to sense a pressure being impaired.

Optionally, the tire monitoring device comprises a temperature sensor, and the altered operational mode of the tire monitoring device comprises an altered operational mode of the temperature sensor.

Optionally, the altered operational mode of the temperature sensor comprises the temperature sensor reading a temperature value outside of an expected normal operating temperature range. Optionally, the altered operational mode of the temperature sensor comprises a capability of the temperature sensor to sense a temperature being impaired.

Optionally, the tire monitoring device comprises a power source, and the altered operational mode of the tire monitoring device comprises an altered operational mode of the power source.

Optionally, the altered operational mode of the power source comprises the power source comprising a power level below a pre-determined threshold. Optionally, the altered operational mode of the power source comprises the power source experiencing a temperature value outside of an expected normal operating temperature range. Optionally, the altered operational mode of the power source comprises the power source experiencing a power draw outside of an expected normal operating power draw range.

Optionally, the tire monitoring device comprises an indicator, and the altered operational mode of the tire monitoring device comprises an altered operational mode of the indicator.

Optionally, the indicator comprises a visual indicator. Optionally, the altered operational mode of the indicator comprises an impairment of the visual indicator to provide an associated visual indication.

Optionally, the indicator comprises a light source that is selectively illuminable to provide an indication to an operator. Optionally, the indicator comprises an LED.

Optionally, the tire monitoring device comprises a time source, and the indication of the altered operational mode of the tire monitoring device is stored in the memory of the tire monitoring device alongside an associated timestamp based on the time source.

Optionally, the altered operational mode of tire monitoring device comprises an altered operational mode of the time source.

Optionally, the second processor is configured to characterize, based on the signal encoding the indication of the altered operational mode of the tire monitoring device, a type of the altered operational mode of the tire monitoring device, and to determine, based on the characterized type of the altered operational mode of the tire monitoring device, the maintenance message.

Optionally, the characterized type of the altered operational mode of the tire monitoring device comprises a priority associated with the altered operational mode of the tire monitoring device.

Optionally, the characterized type of the altered operational mode of the tire monitoring device comprises a priority of a maintenance action associated with the altered operational mode of the tire monitoring device.

Optionally, the first processor is configured to monitor the tire monitoring device to determine a plurality of altered operational modes of the tire monitoring device, and to cause transmission of a signal encoding at least one indication of the altered operational modes of the tire monitoring device to the remote device via the first and second wireless communication interfaces; and the second processor is configured to determine, based on the signal encoding the at least one indication of the altered operational modes of the tire monitoring device, at least one maintenance message corresponding to the altered operational modes of the tire monitoring device, and to cause the at least one maintenance message to be displayed on the display device.

Optionally, the second processor is configured to cause the at least one maintenance message to be displayed on the device in an order of priority, for example as a ranked list.

Optionally, the tire monitoring system comprises a further tire monitoring device comprising: a third processor; and a third wireless communication interface; the third processor is configured to monitor the further tire monitoring device to determine an altered operational mode of the further tire monitoring device, and to cause transmission of a further signal encoding an indication of the altered operational mode of the further tire monitoring device to the remote device via the third and second wireless communication interfaces; and the second processor is configured to determine, based on the further signal encoding the indication of the altered operational mode of the further tire monitoring device, a further maintenance message corresponding to the altered operational mode of the further tire monitoring device, and to cause the further maintenance message to be displayed on the display device.

Optionally, the tire monitoring system comprises an aircraft having a tire, and the tire monitoring device is mounted to the tire.

Optionally, the tire monitoring device is not communicatively coupled to an avionics system of the aircraft.

A second aspect of the present invention provides a method comprising: at a tire monitoring device: determining an altered operational mode of the tire monitoring device; and causing transmission of a signal encoding an indication of the altered operational mode of the tire monitoring device to a remote device via respective first and second wireless communication interfaces of the tire monitoring device and the remote device; and at the remote device: determining, based on the signal encoding the indication of the altered operational mode of the tire monitoring device, a maintenance message corresponding to the altered operational mode of the tire monitoring device; and causing the maintenance message to be displayed on a display device of the remote device.

Optionally, the method comprises receiving, at the tire monitoring device and from the remote device, a request to transmit the signal encoding the indication of the altered operational mode of the tire monitoring device.

Optionally, the method comprises receiving, at the tire monitoring device, a download command from the remote handheld device, transmitting a status message regarding presence of the indication in the memory to the remote device in response to the download command, and transmitting the request from the remote device to the tire monitoring device in response to the status message.

A third aspect of the present invention provides a tire monitoring device comprising: a processor; and a wireless communication interface; wherein the processor is configured to monitor the tire monitoring device to determine an altered operational mode of the tire monitoring device, and to cause transmission of a signal encoding an indication of the altered operational mode of the tire monitoring device to a remote device via the wireless communication interface.

A fourth aspect of the present invention provides a remote device for wireless communication with a tire monitoring device, the remote device comprising a processor; a display device; and a wireless communication interface; wherein: the processor is configured to determine, based on a signal received from a tire monitoring device, the signal encoding an indication of the altered operational mode of the tire monitoring device, a maintenance message corresponding to the altered operational mode of the tire monitoring device, and to cause the maintenance message to be displayed on the display device.

Optional features of aspects of the present invention may be applied equally to other aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an aircraft tire monitoring device;
Figure 2 shows a schematic view of a remote device;
Figure 3 shows a schematic view of an aircraft;
Figure 4 shows a first method according to an example;
Figure 5 shows a schematic view of a tire monitoring system; and
Figure 6 shows a second method according to an example.

### DETAILED DESCRIPTION

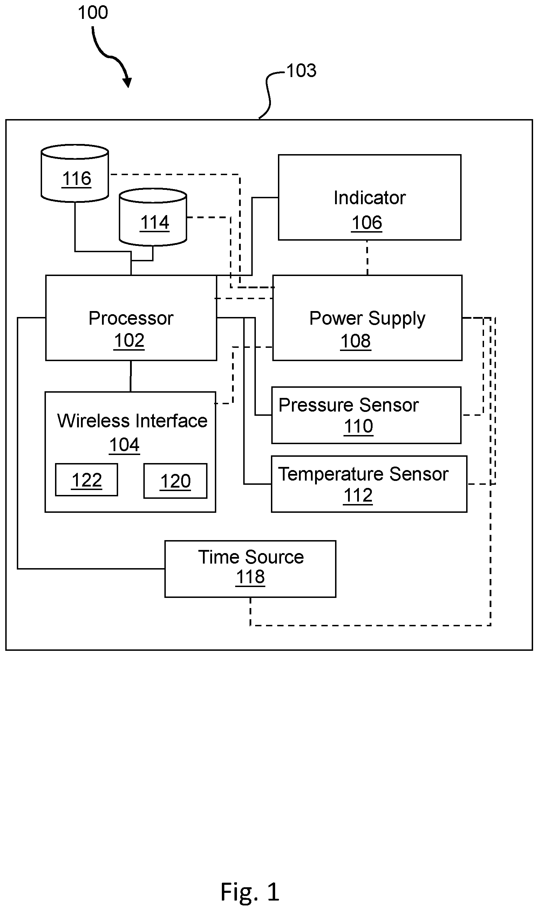

An aircraft tire monitoring device 100 in accordance with the present invention is illustrated schematically in Figure 1, in the form of a tire pressure monitoring device. The tire monitoring device 100 is configured for mounting on a wheel, for example by a mechanical connection to an opening on the wheel providing access to the tire. The tire monitoring device 100 includes a processor 102, a wireless communication interface 104, an indicator 106, a power supply 108, a pressure sensor 110, a temperature sensor 112, a first storage 114, a second storage 116, and a time source 118.

The processor 102 may be any suitable processing device including a microprocessor with one or more processing cores. In use, processor 102 coordinates and controls the other components and may be operative to read and/or write computer program instructions and data from/to the storage 114, 116. The processor 102 may be optimized for low power operation or have at least one processing core optimized for low power operation in some examples. Further operational details of the processor 102 will be discussed in more detail hereinafter.

The wireless communication interface 104 is connected to the processor 102 and is used to both transmit and received data from the other devices of the tire pressure sensor system. In this example, the wireless communication interface 104 includes two transceivers, 120, 122 which both use different wireless technology. A first transceiver 120 is provided for relatively long-range communication, up to about 50m or about 100m. For example, the first transceiver 120 may use a communication standard suitable for mobile devices, such as IEEE 802.15.1, IEEE 802.15.4, IEEE 802.11 (Wi-Fi) on either the 2.4 GHz or 5 GHz Industrial Scientific and Medical (ISM) bands or a Wireless Avionics Intra-Communications (WAIC) standard. The first transceiver 120 also includes an encryption module for encrypting sent data and decrypting received data, for example according to the Advanced Encryption Standard (AES) utilizing pre-shared keys. A second transceiver 122 is provided for relatively short-range communications. For example, the second transceiver 122 may use a standard according to IEEE 802.15, such as IEEE 802.15.4, RFID or Near Field Communication (NFC). The second transceiver 122 may operate over a range of less than 5m, less than 3m, less than 1m, less than 50 cm, less than 25 cm, less than 10 cm, less than 5cm, less than 1cm or requiring contact between devices. Like the first transceiver 120, the second transceiver 122 also includes an encryption module for encrypting sent data and decrypting received data.

In some examples, a single wireless transceiver may be provided in the wireless communication interface 104. In that case the single transceiver may use relatively short range or relatively long range communication, or adjust the range (such as by controlling transmit power) as required.

The indicator 106 is connected to the processor 102 and controlled by the processor 102 to provide indications to a user of the tire monitoring device 100. In this example the indicator 106 is an LED, but in other examples the indicator is another form of light, a display, such as an LCD or e-ink display, or any other form of visual indication. In other examples, the indicator 106 is an audible indicator, such as a buzzer, beeper, speaker or any other sound generating component. In further examples, the indicator 106 can comprise both audible and visual indication components. The indicator 106 provides at least first and second indications, for example a first colour and a second colour of emitted light. Further indications can also be provided, such as solid or flashing light. The tire monitoring device 100 has a housing (not shown) and the indicator 106 can provide an indication outside the housing, for example the LED may be mounted external to the housing or visible through the housing, or sound may be able to be emitted from within the housing.

The power supply 108 provides power to the elements of the tire monitoring device 100. The power supply 108 may be a battery, such as Lithium battery. In this example, the power supply 108 is a Lithium battery with power sufficient to run the sensor in normal operation for about 2 to 3 years. In other examples the power supply 108 may comprise a power harvesting system, for example harvesting vibration and/or electromagnetic radiation to charge a capacitor or battery which is then used to power the device.

The pressure sensor 110 is connected to processor 102 and may be any suitable sensor for measuring pressure, for example a capacitive sensor. Similarly, the temperature sensor 112 is connected to processor 102 and may be any suitable sensor for measuring temperature, such as thermocouple. The temperature sensor 112 may be arranged to measure the temperature of the wheel or the temperature of the gas inside the tire directly. Where the temperature sensor 112 measures the temperature of the wheel, this can be processed to determine the temperature of the gas in the tire. For example, an algorithm or look-up table may be used.

The connection of the pressure sensor 110 and temperature sensor 112 to the processor 102 may be digital, providing a digital representation of the measured pressure and/or temperature from an Analogue to Digital Convertor (ADC) in the sensor itself, or analogue, in which case the processor may include an ADC to sample the received signal. Including both a pressure sensor 110 and a temperature sensor 112 may be useful to determine a temperature compensated pressure value. Although this example includes a pressure sensor 110 and a temperature sensor 112, other examples may include only a pressure sensor, or may include further sensors.

This example includes two storage elements 114 and 116, which can individually or collectively be referred to as local memory of the aircraft tire monitoring device 100. Storage 114 is non-volatile rewritable storage in this example, such as flash memory which can retain data without requiring applied power. Other examples may include volatile storage, which is kept powered by the power supply, or combinations of read-only and rewritable storage. Storage 114 is connected to the processor 102 and used to store both computer program instructions for execution by the processor and data, such as data from the pressure sensor 110 or received over the wireless communication interface 104. In some examples, storage 114 may store a history of pressure and/or temperature readings sensed by the pressure sensor 110 and the temperature sensor 112. For example, the previous ten days readings may be stored, with the newest data replacing the oldest once the storage is full.

The storage 116 is secure storage to which write and/or read access is restricted, for example only accessible to certain processes running on processor 102. Configuration data, such as wireless encryption keys can be stored in storage 116. In other examples, a single storage may be provided, or storage 114 and 116 may be provided in a single physical device with a logical partitioning between storage 114 and storage 116.

The time source 118 comprises a counter or a real time clock. The time source 118 provides a value indicative of current time for indicating the time at which a measurement was taken. For example the processor 100 may cause a current value of the time source 118 to be associated with each pressure and temperature measurement when it is stored in the storage 116 for use as a timestamp.

A timestamp may be an indication of real time (such as Coordinated Universal Time, UTC). A timestamp may also be a relative measurement, such as a counter value where the counter is initialized at a point in the use of the tire monitoring device 100, such as when the tire monitoring device 100 is first put into service. Where relative timestamps are used, they may be converted to a real time by noting the value of the timestamp for a known time and considering the interval at which the counter is incremented.

It is not required for the time source 118 to be synchronized with other tire monitoring devices on the same aircraft because the methods described herein can be applied to the data of each monitoring device independently. When data of more than one tire monitoring device is required to be viewed on a common timeline timestamps can be converted to a common reference timeline. For example the current time when a mandated tire pressure measurement takes place may be recorded along with a corresponding value of the timestamp and used to convert.

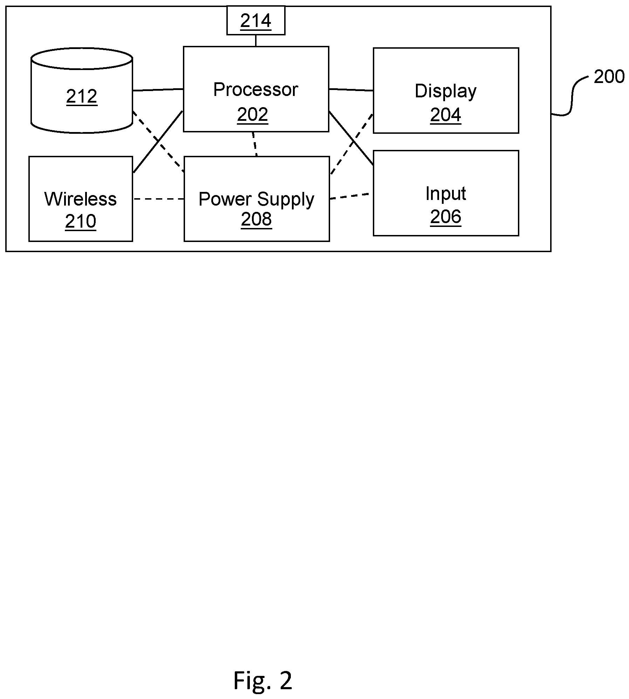

Figure 2 shows a schematic representation of a remote device 200 for use in conjunction with the tire monitoring device 100 of Figure 1. The remote device 200 includes a processor 202, a display 204, an input system 206, a power supply 208, a wireless communication interface 210, a storage 212 and wired communication interface 214. In this example the remote device 200 is a mobile device, such as a cellular phone or a tablet computer.

The processor 202 is any suitable processing device, for example a multipurpose microprocessor, system-on-chip, or system in package, which may include one or more processing cores. Processor 202 is connected to the display 204, such an LCD, OLED or e-ink display to display information to a user of the remote device 200. Further operational details of the processor 202 will be discussed in more detail hereinafter.

The input system 206 includes a touch screen interface in this example, allowing a user to interact with the remote device 200 by touching user interface elements on the screen. The input system 206 may include one or more buttons in addition to the touch screen, as well as other input devices, such as a microphone for speech recognition and a camera for image input. Other examples may not include a touch screen interface.

The remote device is powered by power supply 208, which is a rechargeable lithium-ion battery in this example. Other examples may use alternative power supplies, such as other battery technologies, mains power, or energy harvesting, such as solar power.

A wireless interface 210 is included for the remote device 200 to communicate with other devices, such as the tire monitoring device 100. In this example, a single wireless interface 210 is provided which is configured to communicate with the tire monitoring device 100. For example, a relatively long range wireless communication technology can be used, such as one conforming to IEEE 802.15.1, IEEE 802.15.4 or IEEE 802.11. This allows the remote device 200 to interact with the tire monitoring device 100 from a relatively long range.

In other examples, the remote device 200 may be provided with multiple wireless communication interfaces or transceivers, operating with different wireless technologies, such as at least two of IEEE 802.15.1, IEEE 802.15.4, IEEE 802.11 (Wi-Fi), WAIC, RFID and NFC. For example, the remote device 200 may have two transceivers with one having a longer communication range than the other.

The storage 212 includes a non-volatile element, such as flash memory, and a volatile element, such as RAM. The non-volatile element is used to store operating system software and application software. In this example, the remote device 200 runs standard operating system software and is loaded with application software to interact with the tire monitoring device 100. In order to restrict access to the tire monitoring device 100, the application software may be provided from a secure source and not available to the general public, and/or require credentials to be entered before operating.

A wired communication interface 214 is provided for connection to a computing system. The wired communication interface 214 can be for example, a serial data connection, such as Universal Serial Bus (USB), a parallel data connection or a network connection, such as Ethernet. The wired communication interface 214 may allow the remote device 200 to communicate values and/or other status information read from the tire monitoring device 100 to a computing system, for example to store long term trends and assist fleet management. Alternatively, or additionally, the wired communication interface 214 may be used for communication with the computing system. In some examples, the remote device 200 may not include a wireless communication interface.

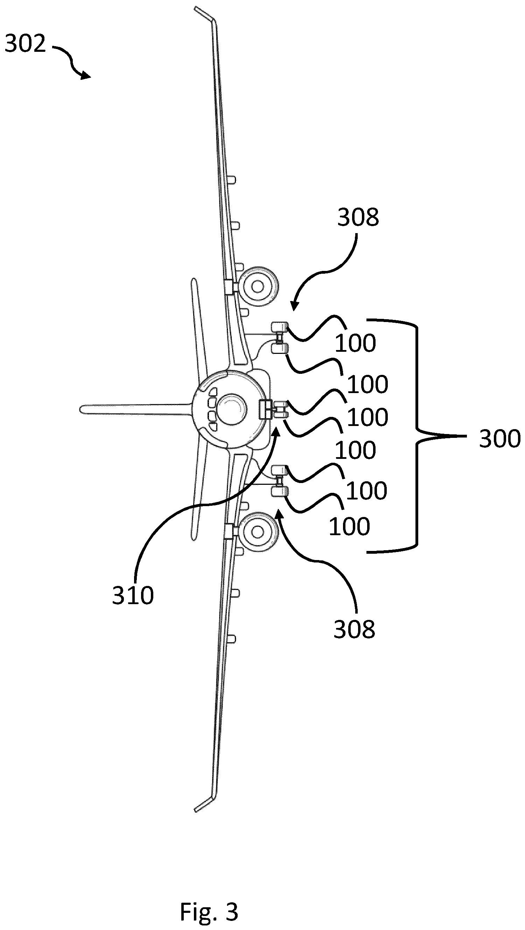

Figure 3 shows a schematic representation of a tire pressure sensor network 300 comprising a plurality of tire monitoring devices 100 installed in an aircraft 302. The aircraft 302 comprises main landing gear 308 and nose landing gear 310. The aircraft 302 may be used in conjunction with any of the methods described herein. Tire monitoring devices 100 are installed on each wheel of the main landing gear 308 and nose landing gear 310.

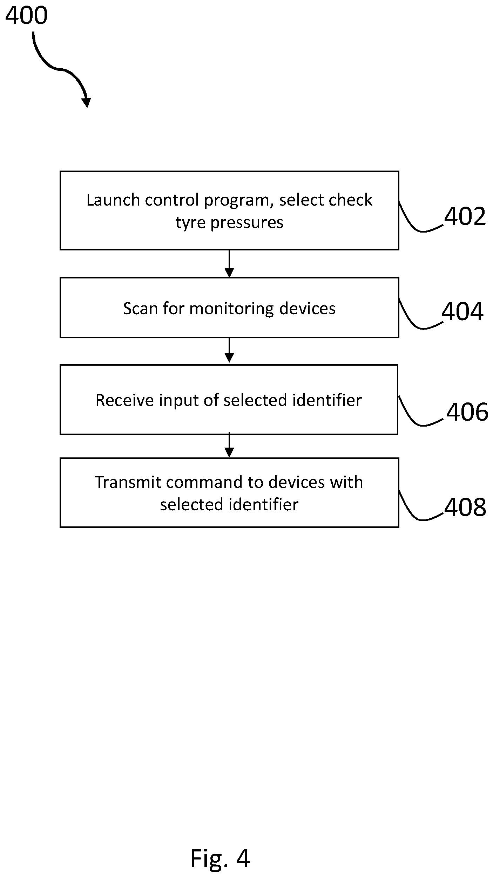

Figure 4 shows a flow chart of a tire pressure check process 400 that can be used with the tire pressure sensor network 300 of Figure 3. First, at block 402, a user launches the tire monitoring control application on the remote device 200. During initialization of the application, a check is made that the wireless communication interface 210 for communication with the tire monitoring devices 100 is active on the remote device 200 and the user is prompted to activate if it is not active.

Next, at block 404, the remote device 200 scans for tire monitoring devices 100 in range. For example, the remote device 200 may send out a probe over the wireless communication interface 210. At the same time, the tire monitoring devices 100 are periodically waking and listening for the probe of the remote device, and/or periodically waking and broadcasting respective identification signals, which include aircraft identifiers, such as a tail identifier of an aircraft to which the tire monitoring device 100 is attached.

The scanning may comprise establishing direct, point-to-point contact with each tire monitoring device 100, or contact through the network 300 of tire monitoring devices 100, for example through an access point, a master device, or any device in a mesh network.

Depending on the communication range and location, tire monitoring devices associated with more than one aircraft may be detected. For example, several aircraft may be in the same hanger in range of the remote device 200. At block 406, input is received of a selected identifier.

Next, at block 408, a request or command is sent to the tire monitoring devices 100 corresponding to the selected identifier to cause them to connect to the remote device 200, for example so that they can receive a request from the remote device 200 to carry out a tire pressure check.

Throughout the process of Figure 4, communication between the remote device 200 and the tire monitoring devices 100 may be secure, for example encrypted by a network key. The network key for the communication with the remote device may be different from the network key used for communication between the sensor devices to enhance the security of the system.

Security may be increased by using a wireless communication technology with a limited transmission distance when exchanging secure keys, for example 802.11 (Wi-Fi) standards may allow transmission over a distance of 50m or further in clear space. This alone may be sufficient to provide increased security because physical proximity is required to intercept communications. In some examples, security may be increased by reducing transmission power when encryption keys are transmitted compared to transmission of the encrypted data itself, requiring closer proximity for the initial key exchange process.

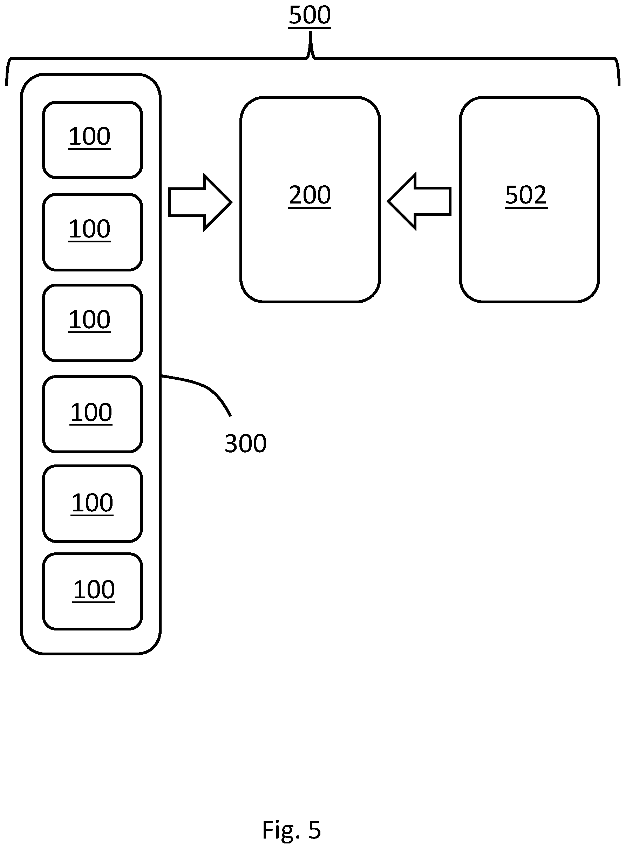

A tire monitoring system 500 that utilises the tire pressure sensor network 300 is illustrated schematically in Figure 5, and comprises the tire pressure sensor network 300 formed of a plurality of tire monitoring devices 100, the remote device 200, and a remote memory 502.

The remote memory 502 is disposed remotely from the tire pressure sensor network 300, and hence the plurality of aircraft tire monitoring devices 100, and the remote device 200, and comprises any memory device capable of storing data such that stored data is accessible to the remote device 200. In some examples the remote memory 502 can comprise a database or the like, for example hosted on a server remote from the tire pressure sensor network 300, and hence the plurality of aircraft tire monitoring devices 100, and the remote device 200. In some examples the remote memory 502 can comprise part of the remote device 200. Similarly, whilst one memory is illustrated, it will be appreciated that in practice the memory may comprise multiple memory devices, for example distributed across physical and/or virtual locations. The remote memory 502 stores a list of pre-determined relationships between altered operational modes and maintenance messages, as will be discussed in more detail hereinafter.

In use of the tire monitoring system 500, each of the respective aircraft tire monitoring devices 100 is configured to wake-up every 10 minutes to measure pressure and temperature values using the respective pressure sensor 110 and temperature sensor 112. Such measured pressure and temperature values are stored in the respective first storage 114 of the aircraft tire monitoring device 100, i.e. in local memory of the aircraft tire monitoring device 100. When a tire pressure check is performed, for example once the aircraft tire monitoring devices 100 are connected to the remote device 200 following an appropriate request or command 408 in accordance with the method 400 described above, the remote device 200 obtains the measured pressure and temperature values from the first storage 114 of the respective aircraft tire monitoring devices 100.

The discussion that follows is provided in relation to one aircraft tire monitoring device 100 of the network 300, but it will be appreciated that the same can be applied to each aircraft tire monitoring device 100 of the network 300.

Throughout the operational lifetime of the aircraft tire monitoring device 100, the processor 102 is configured to monitor the tire monitoring device 100 to determine whether any of the components of the aircraft tire monitoring device 100, and hence whether the aircraft tire monitoring device 100 itself, is operating in an altered operational mode relative to its normal operational mode. The processor 102 can perform checks itself, or cause checks to be performed by one or more pieces of built-in test equipment (BITE - not shown) to determine such an altered operational mode.

Various different types of altered operational mode are envisaged. For example, an altered operational mode of the pressure sensor 110 can be determined when the pressure sensor 110 has reduced capability, or indeed no capability, to obtain a sensed pressure. Additionally, or alternatively, an altered operational mode of the pressure sensor 110 can be determined where the pressure sensor 110 senses a pressure outside of a pressure range that the pressure sensor 110 is expected to experience in normal use.

An altered operational mode of the temperature sensor 112 can be determined when the temperature sensor 112 has reduced capability, or indeed no capability, to obtain a sensed temperature. Additionally, or alternatively, an altered operational mode of the temperature sensor 112 can be determined where the temperature sensor 112 senses a temperature outside of a temperature range that the temperature sensor 112 is expected to experience in normal use.

An altered operational mode of the indicator 106 can be determined when the indicator 106 has reduced capability, or indeed no capability, to provide its associated indication. For example, an altered operational mode of the indicator 106 can be determined where the LED of the indicator 106 is unable to flash.

An altered operational mode of the power source 108 can be determined when a power level of the power source 108 drops below a pre-determined threshold value. Additionally, or alternatively, an altered operational mode of the power source 108 can be determined where the power source 108 experiences a power draw outside of a power draw range that the power source 108 is expected to experience in normal use.

Other altered operational modes are also envisaged.

Where an altered operational mode is determined, the processor 102 causes an indication of the altered operational mode to be stored in the first storage 114 of the aircraft tire monitoring device 100, alongside the measured pressure and temperature values, with an associated timestamp. The indication takes the form of a numerical code corresponding to the altered operational mode. For example, numerical code "000029" may correspond to an altered operational mode of the pressure sensor 110 where the pressure sensor 110 is unable to obtain a pressure reading.

When a tire pressure check is performed in the manner described in relation to Figure 4 above, the remote device 200 requests the pressure and temperature values from the first storage 114 of the aircraft tire monitoring device 100, and in response a signal encoding the pressure and temperature values is transmitted from the aircraft tire monitoring device 100 to the remote device 200 via the wireless communication interfaces 104, 210. At the same time, a status message regarding presence of the indication of the altered operational mode in the first storage 114 is sent from the aircraft tire monitoring device 100 to the remote device 200. In other examples the status message is omitted, and the indication is downloaded alongside the pressure and temperature values from the first storage 114.

Upon receipt of the status message, or receipt of the indication where the status message is omitted, an operator can utilise the remote device 200 to place the aircraft tire monitoring device 100 in a maintenance mode. When the aircraft tire monitoring device 100 is in the maintenance mode, the remote device 200 is used to submit a download command to the aircraft tire monitoring device 100 to retrieve the indication of the altered operational mode from the first storage 114. The aircraft tire monitoring device 100 then transmits a signal encoding the indication, e.g. encoding the numerical code in a binary string, to the remote device 200 via the wireless communication interfaces 104, 210.

Upon receipt of the signal, the processor 202 of the remote device 200 queries the remote memory 502. The processor utilises the list of pre-determined relationships between altered operational modes and maintenance messages stored in the remote memory 502 to determine a maintenance message associated with the particular altered operational mode that has been determined. Such a maintenance message takes the form of a reference to a particular section of an aircraft maintenance manual (AMM) associated with the altered operational mode in question, such that an operator of the remote device 200 knows how to proceed with an appropriate remedial action. The maintenance message is then displayed on the display 204 of the remote device 200.

In such a manner, the tire monitoring system 500 can function similarly to a conventional avionics system, in spite of the aircraft tire monitoring device 100 being unconnected to any avionics system onboard the aircraft 302. In particular, the combination of the aircraft tire monitoring device 100 and the remote device 200 can be utilised to determine altered operational modes of the aircraft tire monitoring device 100, or components thereof, and to direct an operator of the remote device 200 to the relevant section of the AMM so that appropriate remedial action can be taken.

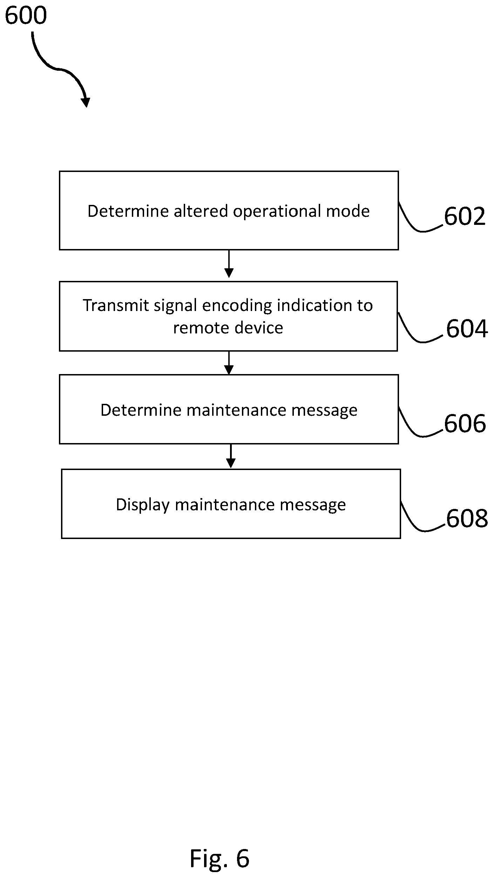

A method 600 in accordance with the above is illustrated in the flow diagram of Figure 6. The method 600 comprises, at the tire monitoring device 100, determining 602 an altered operational mode of the tire monitoring device, and causing 604 transmission of a signal encoding the indication of the altered operational mode of the tire monitoring device 100 to the remote device 200 via the respective first 104 and second 210 wireless communication interfaces of the tire monitoring device 100 and the remote device 200. The method 600 comprises, at the remote device 100, determining 606, based on the signal encoding the indication of the altered operational mode of the tire monitoring device 100, a maintenance message corresponding to the altered operational mode of the tire monitoring device 100, and causing 608 the maintenance message to be displayed on the display 204 of the remote device 200.

It will be appreciated that the tire monitoring device 100 may experience a plurality of altered operational modes concurrently. In such a case, the remote device 200 receives information regarding the plurality of altered operational modes from the tire monitoring device, either encoded in a single signal or encoded in plural signals. The remote device 200 determines, for each of the plurality of altered operational modes, an associated maintenance message. Such maintenance messages are then displayed on the display 204 of the remote device. The plurality of maintenance messages can be displayed as a list, with the maintenance messages ranked in the list according to a priority of the maintenance message or associated altered operational mode of the tire monitoring device 100, The priority can be determined at either the tire monitoring device 100 or the remote device 200. Other forms of display are also envisaged, for example with a higher priority maintenance message displayed initially, and a lower priority maintenance message only visible once an appropriate remedial action has been successfully undertaken in response to the higher priority maintenance message.

It will be further be appreciated that the remote device 200 can receive data, including indications of altered operational modes, from any of the tire monitoring devices 100 in the network 300. For example, an operator may perform a circuit of the aircraft 302 and download data relating to altered operational modes of any number of the tire monitoring devices 100 from the respective tire monitoring device 100 itself. The remote device 200 can then display associated maintenance messages in a manner as previously described. Alternatively, where the tire monitoring devices 100 of the network 300 are able to communicate with one another, an operator can interrogate a single one of the tire monitoring devices 100, and that single one of the tire monitoring devices 100 may then request data to be transmitted to itself from each of the other tire monitoring devices 100 of the network 300, for example alongside an appropriate identifier. That tire monitoring device 100 can then transmit signals encoding indications of the altered operational modes of any of the tire monitoring devices 100 to the remote device 200, in a similar manner to that previously described. Appropriate maintenance messages can then be displayed on the display 204 of the remote device 200.

In some examples, the remote device 200 can provide any of the indication of the altered operational mode and the maintenance message to a remote computing device. Such a remote computing device can then process the data to obtain tire performance characteristics, which may be utilised by a fleet operator to determine appropriate maintenance routines and the like. The data can also be stored in a memory, such as remote memory 502, and such historical data may enable visibility of historical altered operational modes of the tire monitoring device 100.

The remote computing device can, in some examples, perform functions similar to those of the remote device 200 above, with the remote computing device receiving the indication of the altered operational mode of the tire monitoring device 100 from the remote device 200. The remote computing device can then process the indication to determine the maintenance message, with the maintenance message transmitted to the remote device 200 to be displayed to the operator of the remote device 200 via the display 204. In such an example, the remote computing device can be thought of as a processor of the remote device, with the processor located remotely from the display device 204. Additionally or alternatively, the maintenance message can be displayed at the remote computing device itself, for example via a further display of the remote computing device.

In the examples discussed herein, the indication of the altered operational mode of the tire monitoring device 100 can take the form of a relatively simple numerical code, with that numerical code then converted to the maintenance message that directs an operator to the relevant section of an AMM so that appropriate maintenance can be performed. In such a manner the tire monitoring system 500 discussed herein can function in a similar manner to a conventional aircraft avionics system, such as a Central Maintenance system (CMS), that an operator would typically use. This is in spite of the tire monitoring devices 100 not being connected to any conventional aircraft avionics system.

It is to noted that the term "or" as used herein is to be interpreted to mean "and/or", unless expressly stated otherwise.

## Claims

1. A tire monitoring system comprising:
a tire monitoring device comprising:
a first processor; and
a first wireless communication interface; and
a remote device comprising:
a second processor;
a display device; and
a second wireless communication interface;
wherein:
the first processor is configured to monitor the tire monitoring device to determine an altered operational mode of the tire monitoring device, and to cause transmission of a signal encoding an indication of the altered operational mode of the tire monitoring device to the remote device via the first and second wireless communication interfaces; and
the second processor is configured to determine, based on the signal encoding the indication of the altered operational mode of the tire monitoring device, a maintenance message corresponding to the altered operational mode of the tire monitoring device, and to cause the maintenance message to be displayed on the display device.

2. The tire monitoring system according to Claim 1, wherein the remote device comprises a remote handheld device.

3. The tire monitoring system according to Claim 1 or Claim 2, wherein the first processor is configured to cause transmission of the signal encoding the indication of the altered operational mode of the tire monitoring device in response to a request from the remote device, optionally wherein the tire monitoring device is configured to enter a maintenance mode in response to the request from the remote device, and the first processor is configured to cause transmission of the signal when the tire monitoring device is in the maintenance mode, and optionally wherein the tire monitoring device comprises a memory configured to store the indication of the altered operational mode of the tire monitoring device, and the tire monitoring device is configured to receive a download command from the remote device, and to transmit a status message regarding presence of the indication in the memory to the remote device in response to the download command, and the remote device is configured to transmit the request to the tire monitoring device in response to the status message.

4. The tire monitoring system according to any one of the preceding claims, wherein the maintenance message comprises a message that directs an operator of the remote device to a section of an aircraft maintenance manual.

5. The tire monitoring system according to any one of the preceding claims, wherein the indication of the altered operational mode of the tire monitoring device comprises a numerical value corresponding to the altered operational mode of the tire monitoring device.

6. The tire monitoring system according to any one of the preceding claims, wherein the tire monitoring system comprises a remote memory accessible by the second processor, the remote memory is configured to store a relationship between the indication of the altered operational mode of the tire monitoring device and the maintenance message, and the second processor is configured to obtain the relationship to determine the maintenance message.

7. The tire monitoring system according to any one of the preceding claims, wherein the tire monitoring device comprises at least one of:
a pressure sensor, and the altered operational mode of the tire monitoring device comprises an altered operational mode of the pressure sensor;
a temperature sensor, and the altered operational mode of the tire monitoring device comprises an altered operational mode of the temperature sensor;
a power source, and the altered operational mode of the tire monitoring device comprises an altered operational mode of the power source; or
an indicator, and the altered operational mode of the tire monitoring device comprises an altered operational mode of the indicator, optionally wherein the indicator comprises a visual indicator, and the altered operational mode of the indicator comprises an impairment of the visual indicator to provide an associated visual indication.

8. The tire monitoring system according to any one of the preceding claims, wherein the tire monitoring device comprises a time source, and the indication of the altered operational mode of the tire monitoring device is stored in a memory of the tire monitoring device alongside an associated timestamp based on the time source.

9. The tire monitoring system according to any one of the preceding claims, wherein the second processor is configured to characterize, based on the signal encoding the indication of the altered operational mode of the tire monitoring device, a type of the altered operational mode of the tire monitoring device, and to determine, based on the characterized type of the altered operational mode of the tire monitoring device, the maintenance message.

10. The tire monitoring system according to any one of the preceding claims, wherein the tire monitoring system comprises an aircraft having a tire, and the tire monitoring device is mounted to the tire, and optionally wherein the tire monitoring device is not communicatively coupled to an avionics system of the aircraft.

11. A method comprising:
at a tire monitoring device:
determining an altered operational mode of the tire monitoring device; and
causing transmission of a signal encoding an indication of the altered operational mode of the tire monitoring device to a remote device via respective first and second wireless communication interfaces of the tire monitoring device and the remote device; and
at the remote device:
determining, based on the signal encoding the indication of the altered operational mode of the tire monitoring device, a maintenance message corresponding to the altered operational mode of the tire monitoring device; and
causing the maintenance message to be displayed on a display device of the remote device.

12. The method according to Claim 11, wherein the method comprises receiving, at the tire monitoring device and from the remote device, a request to transmit the signal encoding the indication of the altered operational mode of the tire monitoring device, and optionally wherein the method comprises receiving, at the tire monitoring device, a download command from the remote device, transmitting a status message regarding presence of the indication in the memory to the remote device in response to the download command, and transmitting the request from the remote device to the tire monitoring device in response to the status message.

13. A tire monitoring device comprising:
a processor; and
a wireless communication interface;
wherein the processor is configured to monitor the tire monitoring device to determine an altered operational mode of the tire monitoring device, and to cause transmission of a signal encoding an indication of the altered operational mode of the tire monitoring device to a remote device via the wireless communication interface.

14. A remote device for wireless communication with a tire monitoring device, the remote device comprising:
a processor;
a display device; and
a wireless communication interface;
wherein the processor is configured to determine, based on a signal received from the tire monitoring device, the signal encoding an indication of the altered operational mode of the tire monitoring device, a maintenance message corresponding to the altered operational mode of the tire monitoring device, and to cause the maintenance message to be displayed on the display device.
